Europäisches Patentamt

European Patent Office

Office européen des brevets

(19)

(11) Numéro de publication: **0 163 336**
**B1**

(12) **FASCICULE DE BREVET EUROPÉEN**

(45) Date de publication du fascicule du brevet:
29.06.88

(21) Numéro de dépôt: 85200659.2

(22) Date de dépôt: 29.04.85

(51) Int. Cl.⁴: **B 29 C 55/26,** B 29 C 49/48,
B 29 C 49/08

(54) Appareillage pour la fabrication de tuyaux en matière plastique orientée moléculairement.

(30) Priorité: 07.05.84 FR 8407182

(43) Date de publication de la demande:
04.12.85 Bulletin 85/49

(45) Mention de la délivrance du brevet:
29.06.88 Bulletin 88/26

(84) Etats contractants désignés:
AT BE CH DE FR GB IT LI NL SE

(56) Documents cité:
FR-A-2 510 940

(73) Titulaire: **DRAKA POLVA B.V., Vlaardingenlaan 11,
NL- 1062 HM Amsterdam (NL)**

(72) Inventeur: **Eygelaar, Klaas, Tinnegieter, 14, Hoorn
(NL)**
Inventeur: **Karreman, Jaap, Driebanen, 63,
Enkhuizen (NL)**
Inventeur: **Karreman, Peter, Exterpad, 2, Enkhuizen
(NL)**

(74) Mandataire: **Bouchoms, Maurice, Solvay & Cie
Département de la propriété industrielle 310, rue
de Ransbeek, B-1120 Bruxelles (BE)**

## Description

La présente invention concerne un appareillage perfectionné convenant particulièrement pour fabriquer des tuyaux en matière plastique orientée moléculairement par expansion radiale, au moyen d'un fluide, d'une section de tuyaux en matière plastique non orientée se trouvant à une température à laquelle un étirage induit une orientation moléculaire.

Un procédé et un appareillage convenant particulièrement pour réaliser des tuyaux en matière plastique orientée moléculairement selon cette technique d'étirage font déjà l'objet de la demande de brevet FR-A-2510940 au nom de SOLVAY & Cie.

Selon ce procédé, on place une section de tuyaux dans un moule, on provoque l'expansion radiale de la section de tuyaux portée à une température à laquelle un étirage induit une orientation moléculaire de la matière plastique au moyen d'un fluide que l'on introduit sous pression dans la section de tuyau après avoir obturé celle-ci à ses deux extrémités, on refroidit le tuyau résultant et on l'extrait du moule, ledit procédé se caractérisant en ce qu'on enserre la section de tuyau dans un fourreau et on provoque un déplacement relatif du fourreau le long de la section de tuyau pendant qu'on y introduit le fluide, de manière à provoquer l'expansion radiale de la section de tuyau en aval du fourreau. Dans ce procédé, l'amorçage de l'expansion radiale de la section de tuyau à orienter a toujours lieu à une extrémité et la bulle d'expansion formée s'étend progressivement le long de la section de tuyau, cette progression étant contrôlée par le déplacement relatif du fourreau. Ce procédé permet d'obtenir des tuyaux orientés dont l'orientation radiale est parfaitement maîtrisée même pour des tuyaux de grande longueur.

L'appareillage utilisable pour réaliser ce procédé comporte un moule tubulaire dont les dimensions transversales correspondent à celles du tuyau à produire et qui est équipé d'un dispositif d'admission d'un fluide sous pression dans une zone du moule destinée à recevoir la section de tuyau à expanser radialement, d'un organe d'obturation et de préhension d'une extrémité de la section de tuyau dans le moule, d'un fourreau tubulaire qui débouche dans le moule par une extrémité ouverte en regard de l'organe d'obturation et de préhension et qui présente des dimensions transversales correspondant à celles de la section de tuyau qu'il est destiné à recevoir, et d'un moyen pour provoquer un déplacement axial relatif contrôlé du fourreau par rapport à l'organe d'obturation et de préhension, pour les écarter l'un de l'autre et extraire la section de tuyau du fourreau et qui se caractérise en ce que l'extrémité ouverte du fourreau est équipée d'un piston annulaire monté à coulissement dans le moule.

Selon la demande de brevet précitée, le piston annulaire présente une surface annulaire, disposée à la sortie du fourreau et s'étendant vers la paroi interne du moule, de forme générale tronconique et évasée en direction de l'organe d'obturation et de préhension, l'angle de conicité étant compris entre 15 et 75°.

Il a toutefois été constaté qu'en utilisant un tel piston dans l'appareillage sus-décrit le taux d'orientation longitudinale des tuyaux orientés moléculairement obtenus n'est pas assez reproductible et contrôlable. De plus, il a été constaté que les tuyaux orientés moléculairement obtenus peuvent présenter des irrégularités d'épaisseur de paroi.

Il a été maintenant trouvé qu'il est possible avec l'appareillage sus-décrits et moyennant une modification de la forme du piston d'obtenir des tuyaux orientés moléculairement dans lesquels le taux d'étirage longitudinal et partant d'orientation moléculaire longitudinale peuvent être contrôlés de façon très précise et parfaitement reproductible, les tuyaux ainsi obtenus se caractérisent en outre par une très grande régularité d'épaisseur de paroi.

La présente invention concerne dès lors un appareillage pour la fabrication de tuyaux en matière plastique orientée moléculairement par expansion radiale d'une section de tuyau comprenant un moule tubulaire dont les dimensions transversales correspondent à celles du tuyau à produire et qui est équipé d'un dispositif d'admission d'un fluide sous pression dans une zone du moule destinée à recevoir la section de tuyau à expanser radialement, d'un organe d'obturation et de préhension d'une extrémité de la section de tuyau dans le moule, d'un fourreau tubulaire qui débouche dans le moule, par une extrémité ouverte en regard de l'organe d'obturation et de préhension et qui présente des dimensions transversales correspondant à celles de la section de tuyau à orienter qu'il est destiné à recevoir et d'un moyen pour provoquer un déplacement axial relatif contrôlé du fourreau par rapport à l'organe d'obturation et de préhension, pour les écarter l'un de l'autre et extraire la section du tuyau du fourreau dans lequel l'extrémité ouverte du fourreau est équipée d'un piston annulaire monté à coulissement dans le moule et comportant une surface disposée à la sortie du fourreau s'étendant vers la paroi interne du moule et de forme générale tronconique qui se caractérise en ce que ladite surface est évasée en direction opposée à l'organe d'obturation et de préhension.

Il a en effet été constaté que le fait d'inverser la direction de la conicité de la surface du piston permet contre toute attente l'obtention de tuyaux orientés moléculairement dans lesquels le taux d'orientation moléculaire dans le sens longitudinal est parfaitement reproductible.

Selon un mode de réalisation préférentiel, l'angle de conicité de la surface tronconique du piston est compris entre 1 et 89° et, de préférence, entre 30 et 80°.

La surface de forme générale tronconique peut également être constituée par une superposition d'une pluralité de surfaces tronconiques ayant des angles de conicité différents.

Selon un mode de réalisation qui se révèle également très avantageux la surface tronconique est raccordée à la paroi du piston coulissant sur le tuyau selon un arrondi dont le rayon de courbure est compris entre 0,1 et 20 mm et de préférence entre 0,5 et 10 mm.

Il a en outre été constaté que l'appareillage conforme à l'invention peut reprendre toutes les variantes de réalisation proposée dans la demande de brevet français précitée pour autant que le piston présente les caractéristiques susmentionnées.

L'appareillage conforme à l'invention est par ailleurs explicité plus en détail dans la description qui va suivre d'un mode de réalisation pratique.

Dans cette description, on se référera aux figures des dessins annexés dans lesquels :

- la fig. 1 est une vue en coupe d'un appareillage conforme à l'invention dans sa position avant l'expansion de la section de tuyau;

- la fig. 2 est une vue en coupe agrandie du piston équipant l'appareillage de la fig. 1.

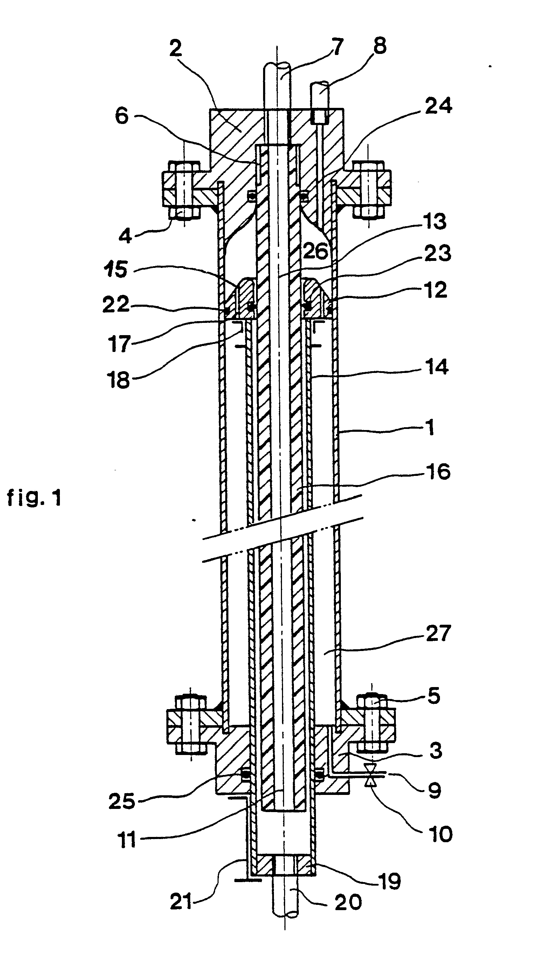

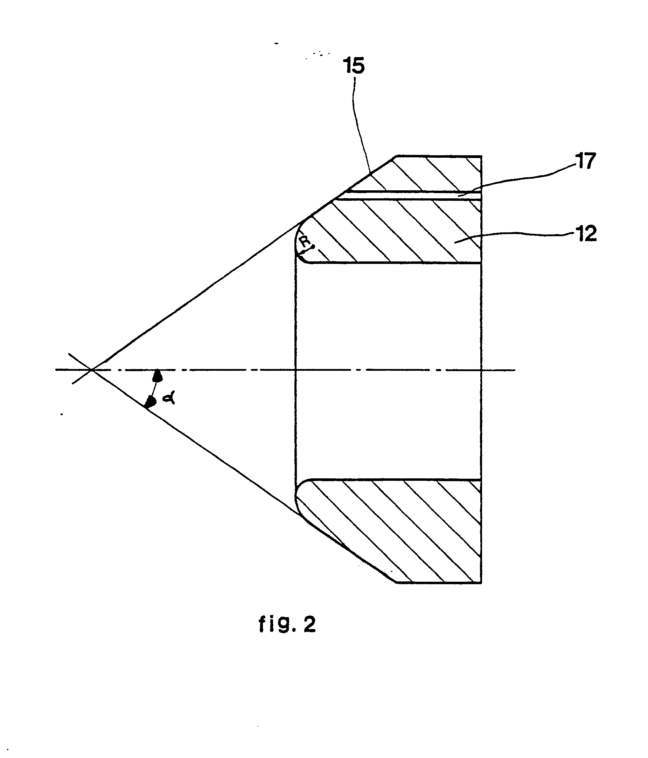

Ainsi qu'il apparaît aux fig. 1 et 2, l'appareillage conforme à l'invention comporte un moule constitué extérieurement d'une enveloppe tubulaire 1 bridée à ses extrémités et de deux couvercles 2, 3 fixés de façon amovible par des boulons 4, 5 aux brides de l'enveloppe tubulaire 1.

Le diamètre interne de l'enveloppe tubulaire 1 correspond au diamètre externe de la section de tuyau orienté que l'on désire produire.

Le premier couvercle 2 comporte un organe d'obturation et de préhension 6 constitué par un logement central interne fileté pour y fixer et retenir une section de tuyau 16 à orienter, une tubulure axiale 7 débouchant dans le logement et une tubulure latérale 8 débouchant à l'extérieur du logement et dans l'enveloppe tubulaire 1.

Le second couvercle 3 est pourvu d'une tubulure périphérique 9 débouchant dans le moule et équipée d'une vanne réglable 10 et il comporte une ouverture centrale 11.

L'appareillage comporte en outre un fourreau tubulaire 14 disposé axialement dans l'enveloppe 1 et fixé, à une extrémité, sur un piston annulaire 12 pouvant coulisser axialement dans l'enveloppe 1. L'ouverture centrale circulaire 13 du piston 12 et le diamètre interne du fourreau 14 correspondent sensiblement au diamètre externe de la section de tuyau 16 à orienter moléculairement par expansion radiale. Le piston 12 est en outre percé de tubulures longitudinales 17 qui sur la face arrière du piston sont équipées de clapets anti-retour 18.

Le piston annulaire 12 comporte une surface 15 disposée à la sortie du fourreau 14 s'étendant vers la paroi interne du moule 1 et de forme générale tronconique. Conformément à l'invention ladite surface est évasée en direction opposée à l'organe d'obturation et de préhension 6.

Ainsi qu'il apparaît plus particulièrement à la fig. 2, l'angle alpha de conicité de la surface tronconique 15 est égal à 37° et la surface tronconique est raccordée à la paroi du piston 12 coulissant sur le tuyau 16 selon un arrondi dont le rayon de courbure R est égal à 6 mm.

Le fourreau 14 est monté à coulissement dans l'ouverture centrale 11 prévue dans le couvercle 3, qui constitue de la sorte un second piston, solidaire de l'enveloppe 1 du moule. La longueur du fourreau 14 est telle que celui-ci débouche par cette ouverture centrale 11 lorsque le piston 12 se trouve à proximité du couvercle 2. L'extrémité du fourreau 14 opposée au piston 12 est équipée d'un bouchon d'obturation 19 pourvu d'une tubulure 20 équipée d'une vanne non représentée, de manière à former un obturateur de la section de tuyau 16.

Des joints toriques 22 et 25 assurent respectivement l'étanchéité entre le piston 12 et l'enveloppe 1 et entre le couvercle 3 et le fourreau 14, de manière à délimiter une chambre annulaire 27 de volume variable. Des joints toriques 23 et 24 sont également prévus pour assurer une fiction étanche de la section de tuyau 16 au couvercle 2 et son passage étanche à travers l'ouverture 13 du piston 12. Le couvercle est en outre équipé d'un verrou 21 qui permet de bloquer le fourreau 14 lorsque le piston 12 se trouve à proximité du couvercle 2.

Pour exploiter l'appareillage des figures 1 et 2 en vue de produire un tuyau orienté, il convient de détacher le couvercle 2 de l'enveloppe tubulaire 1 et de fixer, par exemple par vissage, l'extrémité d'une section de tuyaux 16 en matière plastique dans l'organe d'obturation et de préhension 6. Ensuite la section de tuyau est introduite par l'autre extrémité dans l'appareillage de façon telle que celle-ci traverse le piston 12 et se loge dans le fourreau 14. Le couvercle 2 est alors à nouveau fixé sur l'enveloppe 1 et le piston 12 est amené dans la position illustrée à la fig. 1 et bloqué en place par l'intermédiaire du verrou 21 agissant sur l'extrémité du fourreau 14. La section de tuyau 16 ainsi enfermée dans l'appareillage est alors amenée à la température d'orientation de la matière plastique par une circulation d'un fluide à température adéquate tel que de l'huile. Ce fluide est introduit via les tubulures 7 et 8, circule à l'intérieur de la section de tuyau 16 et dans la chambre annulaire 27 via notamment les tubulures 17 et est repris par les tubulures 9 et 20. Lorsque la section de tuyau 16 a atteint sa température d'orientation on interrompt la circulation du fluide caloporteur, on ferme la vanne 10 de la tubulure 9 et on met la tubulure 8 à l'air libre de façon à purger la chambre 26 de son fluide. Il convient de noter que le fluide reste par contre emprisonné dans l'espace 27 puisque les clapets 18 empêchent son écoulement par les tubulures 17.

Pour initier l'expansion de la section de tuyau 16 il convient alors de débloquer le verrou 21 et d'augmenter la pression du fluide introduit dans

la section de tuyau 16 via la tubulure 7, la vanne d'évacuation 20 étant fermée. De ce fait, la portion de la section de tuyau se trouvant dans la chambre 26 située en aval du fourreau 14 et du piston 12 se dilate radialement et vient s'appliquer sur le contour externe de cette chambre 26, tandis que la partie restante de la section de tuyau 16 est retenue latéralement par le fourreau 14 et ne se déforme pas. En outre, durant cette expansion radiale initiale de la section de tuyau, le piston 12 ne peut pas se déplacer puisqu'il est bloqué par le fluide enfermé dans la chambre 27. Pour provoquer et contrôler la progression de l'expansion le long de la section de tuyau 16, il suffit alors d'ouvrir la vanne 10 de façon prédéterminée afin d'éliminer progressivement le fluide enfermé dans la chambre 27. Le piston 12 et le fourreau 14 peuvent dès lors se déplacer progressivement à une vitesse prédéterminée vers le couvercle 3, sous l'action du fluide injecté via la tubulure 7 autorisant ainsi une expansion progressive de toute la section de tuyau 16 jusqu'au diamètre de l'enveloppe tubulaire 1.

Le déplacement du piston 12 et du fourreau 14 est amorti par l'échappement réglé, via la tubulure 9 et la vanne 10, du fluide contenu dans la chambre 27, ce qui permet de régler à la valeur choisie, la vitesse du déplacement, par exemple entre environ 0,1 et 10 m/min. Lorsque le piston 12 atteint le couvercle 3, le processus d'expansion de la section de tuyau 16 est terminé et on arrête l'injection de fluide sous pression. Le fluide d'expansion peut alors être remplacé progressivement par un fluide froid sous pression de façon à refroidir la section de tuyau 16 expansée tout en la maintenant en forme. Le tuyau moléculairement orienté peut alors être extrait de l'appareillage.

On constate qu'avec l'appareillage décrit on peut produire des sections de tuyaux orientés moléculairement dont les taux d'orientation tant radial que longitudinal peuvent être contrôlés de façon très précise. Les tuyaux obtenus se caractérisent par une épaisseur de paroi remarquablement constante et conviennent particulièrement pour la réalisation de canalisations destinées à véhiculer des fluides liquides ou gazeux sous pression.

## Revendications

1. Appareillage pour la fabrication de tuyaux en matière plastique orientée moléculairement par expansion radiale d'une section de tuyau (16) comprenant un moule tubulaire (1) dont les dimensions transversales correspondant à celles du tuyau à produire et qui est équipé d'un dispositif (7) d'admission d'un fluide sous pression dans une zone du moule (1) destinée à recevoir la section de tuyau à expanser radialement, d'un organe d'obturation et de préhension (6) d'une extrémite de la section de tuyau dans le moule, d'un fourreau tubulaire (14) qui débouche dans le moule (1) par une extrémité ouverte en regard de l'organe d'obturation et de préhension (6) et qui présente des dimensions transversales correspondant à celles de la section de tuyau (16) qu'il est destiné à recevoir et d'un moyen (1) (3) (7) (9) (12) pour provoquer un déplacement axial relatif contrôlé du fourreau (14) par rapport à l'organe d'obturation et de préhension (6), pour les écarter l'un de l'autre et extraire progressivement la section de tuyau (16) du fourreau (14) et dans lequel l'extrémité ouverte du fourreau (14) est équipée d'un piston annulaire (12) monté à coulissement dans le moule (1) et comportant une surface (15) disposée à la sortie du fourreau (14) s'étendant vers la paroi interne du moule (1) et de forme générale tronconique caractérisé en ce que ladite surface (15) est évasée en direction opposée à l'organe d'obturation et de préhension (6).

2. Appareillage selon la revendication 1 caractérisé en ce que l'angle alpha de conicité de la surface tronconique (15) du piston (12) est compris entre 1 et 89°.

3. Appareillage selon la revendication 1 caractérisé en ce que la surface tronconique (15) est constituée par une superposition d'une pluralité de surfaces tronconiques ayant des angles de conicité différents.

4. Appareillage selon l'une quelconque des revendications 1 à 3 caractérisé en ce que la surface tronconique (15) est raccordée à la paroi du piston (12) coulissant sur le tuyau (16) selon un arrondi dont le rayon de courbure est compris entre 0,1 et 20 mm.

## Patentansprüche

1. Vorrichtung zum Herstellen von Rohren aus molekularorientiertem Kunststoff durch radiale Ausdehnung eines Abschnitts des Rohres (16), umfassend eine röhrenförmige Form (1), deren Querabmessungen denen des herzustellenden Rohres entsprechen und die mit einer Vorrichtung (7) zum Einlaß eines Fluids unter Druck in eine Zone der Form (1), welche bestimmt ist den radial auszudehnenden Abschnitt des Rohres zu empfangen, einem Verschließungs- und Greifelement (6) an einem Ende des Rohrabschnitts in der Form, einer röhrenformigen Hülse (14), die in die Form (1) durch ein oftenes Ende, gegenüber von dem Verschließungs- und Greifelement (6), einmündet und welche Querabmessungen zeigt, die denen des Abschnitts des Rohres (16), das sie zu empfangen bestimmt ist, entsprechen und einem Mittel (1) (3) (7) (9) (12) zur Bewirkung einer kontrollierten relativen axialen Verschiebung der Hülse (14) hinsichtlich des Verschließungs- und Greifelements (6) ausgerüstet ist, um sie, die eine von dem anderen zu entfernen und den Abschnitt des Rohres (16) zunehmend aus der Hülse (14) herauszuziehen und in welcher das offene Ende der Hülse (14) mit einem ringförmigen Kolben (12), der gleitend in der Form (1) montiert ist, ausgerüstet ist und eine Oberfläche (15) umfaßt, die am Auslaß der Hülse (14), sich in Richtung der inneren Wand der Form (1) erstreckend, vorgesehen ist und von allgemeiner kegelstumpfartiger Form ist, dadurch gekennzeichnet, daß die genannte Oberfläche (15) in entgegengesetzter Richtung zu dem Verschließungs- und Greifelement (6) konisch erweitert ist.

2. Vorrichtung nach Anspruch 1, dadurch gekennzeichnet, daß der Winkel α der Kegelneigung der kegelstumpfartigen Oberfläche (15) des Kolbens (12) zwischen 1 und 89° liegt.

3. Vorrichtung nach Anspruch 1, dadurch gekennzeichnet, daß die kegelstumpfartige Oberfläche (15) durch eine Überlagerung einer Vielzahl kegelstumpfartiger Oberflächen, die unterschiedliche Kegelneigungswinkel aufweisen, gebildet ist.

4. Vorrichtung nach einem der Ansprüche 1 - 3, dadurch gekennzeichnet, daß die kegelstumpfartige Oberfläche (15) mit der Wand des Kolbens (12), der auf dem Rohr (16) gleitet, gemäß einer Rundung deren Krümmungsradius zwischen 0,1 und 20 mm liegt, verbunden ist.

## Claims

1. Apparatus for the manufacture of molecularly oriented plastic pipes by radial expansion of a pipe section (16), comprising a tubular mould (1) the transverse dimensions of which correspond to those of the pipe to be produced and which is equipped with a device (7) for admitting a fluid under pressure into a region of the mould (1) intended to receive the pipe section to be radially expanded, a member for closing and grasping (6) one end of the pipe section in the mould, a tubular sleeve (14) which opens into the mould (1) by an open end facing the closing and grasping member (6) and which has transverse dimensions corresponding to those of the pipe section (16) which it is intended to receive and a means (1) (3) (7) (9) (12) for producing a controlled relative axial displacement of the sleeve (14) in relation to the closing and grasping member (6), for moving them and for gradually extracting the pipe section (16) from the sleeve (14) and in which the open end of the sleeve (14) is equipped with an annular plunger (12) mounted so as to slide in the mould (1) and incorporating a surface (15) arranged at the exit of the sleeve (14) extending towards the inner wall of the mould (1) and generally frustoconical in shape, characterized in that the said surface (15) is widened out in a direction away from the closing and grasping member (6).

2. Apparatus according to Claim 1, characterized in that the conicity angle alpha of the frustoconical surface (15) of the plunger (12) is between 1 and 89°.

3. Apparatus according to Claim 1, characterized in that the frustoconical surface (15) consists of a superposition of a plurality of frustoconical surfaces having different conicity angles.

4. Apparatus according to any one of Claims 1 to 3, characterized in that the frustoconical surface (15) is joined to the wall of the plunger (12) which slides over the pipe (16) via a round-off the radius of curvature of which is between 0.1 and 20 mm.

fig. 1

fig. 2